# EUROPÄISCHE PATENTSCHRIFT

(11) **EP 0 609 291 B1**
(45) Veröffentlichungstag und Bekanntmachung des Hinweises auf die Patenterteilung: **26.06.1996**
(21) Anmeldenummer: 92921458.3
(22) Anmeldetag: 21.10.1992
(51) Int. Cl.: C04B 18/02, C04B 28/02, B09B 3/00, C02F 11/00

(54) **VERFAHREN ZUM AUFBEREITEN VON METALLHALTIGEN UND/ODER MINERALISCHEN SCHLÄMMEN UND/ODER FEUCHTEN METALL- ODER MINERAL-FASERSTOFFEN FÜR DIE WEITERVERARBEITUNG**
PROCESS FOR PREPARING METAL-CONTAINING AND/OR MINERAL SLUDGES AND/OR WET METALLIC OR MINERAL FIBROUS MATERIALS IN VIEW OF ULTERIOR PROCESSING
PROCEDE DE PREPARATION DE BOUES CONTENANT DES METAUX, DE BOUES MINERALES ET/OU DE MATIERES FIBREUSES HUMIDES METALLIQUES OU MINERALES HUMIDES EN VUE D'UN TRAITEMENT ULTERIEUR

(30) Priorität: 21.10.1991 DE 4134737
(43) Veröffentlichungstag der Anmeldung: 10.08.1994
(73) Patentinhaber: Schraufstetter, Wilfried, D-85737 Ismaning (DE); Gastinger, Dieter, D-81249 München (DE)
(72) Erfinder: Schraufstetter, Wilfried, D-85737 Ismaning (DE); Gastinger, Dieter, D-81249 München (DE)
(74) Vertreter: Lesser, Karl-Bolko, Dipl.-Ing.
(86) Internationale Anmeldenummer: EP9202414
(87) Internationale Veröffentlichungsnummer: WO9308134

(56) Entgegenhaltungen:
- EP-A- 0 120 097
- EP-A- 0 380 713
- EP-A- 0 389 328
- EP-A- 0 408 545
- US-A- 3 555 996
- US-A- 4 260 264

## Beschreibung

Die Erfindung betrifft ein Verfahren zum Aufbereiten von metallhaltigen und / oder mineralischen Schlämmen und / oder feuchten Metall- oder Mineral-Faserstoffen für die Weiterverarbeitung.

Insbesondere in Walzwerken fallen beim Walzen große Mengen von metallhaltigen Schlämmen an, die neben Metall und Wasser auch Öl enthalten und deren Lagerung oder Wiederverwendung heute noch ein großes Problem für die Umwelt darstellen. Auch in Kläranlagen, insbesondere solchen, die Stahlwerken oder metallverarbeitenden Betrieben od.dgl. zugeordnet sind, fallen größere Mengen metall- und ölhaltiger Klärschlämme an.

Solche Schlämme können bis zu 70 % Metall enthalten. Die darin enthaltenen Metallpartikel weisen aber eine so geringe Größe auf, daß ein Trennen des Metalls vom Öl und anderen Flüssigkeiten sehr schwierig bis unmöglich ist.

Wird metallhaltiger Ölschlamm getrocknet, so kann das abgetrennte Metall(-pulver) darüber hinaus aufgrund seiner geringen Partikelgröße als loses Material nicht wieder verhüttet werden.

In den Schlämmen können als Metalle z.B. Eisen, Stahl, Zink od.dgl. vorhanden sein, was vom verarbeitenden Betrieb abhängt.

Auch bei der Herstellung von Metallfasern, wie Stahlfasern od.dgl. oder Mineral-Fasern, wie Fasern aus Steinwolle, Asbest-Fasern od.dgl. fallen Schlämme mit diesen Materialien an, die zum Teil getrocknet werden (können), die aber auch dann immer noch eine relativ große Feuchte aufweisen. Auch diese im Produktionsprozess anfallenden Abfallmaterialien sind schwierig zu handhaben bzw. weiter zu verarbeiten. Insbesondere weisen sie ein großes Volumen auf, da zwischen ihnen sehr viel Luft enthalten ist.

Der Erfindung liegt deshalb die Aufgabe zugrunde, ein Verfahren zum Aufbereiten von metallhaltigen und / oder mineralischen Schlämmen und / oder feuchten Metall- oder Mineral-Faserstoffen zu schaffen, bei dem die darin enthaltenen Materialien, wie Metalle oder Faserstoffe wieder verwendet werden können.

Diese Aufgabe wird durch das im Anspruch 1 beschriebene Verfahren gelöst. Bei diesem Verfahren zum Aufbereiten von metallhaltigen und / oder mineralischen Schlämme und / oder feuchten Metall- oder Mineral-Faserstoffen für die Weiterverarbeitung werden die Schlämme und / bzw. Faserstoffe zusammen mit einem hydraulischen Bindemittel, wie Zement, Kalk, Gips od.dgl. in einer Schneckenpresse gemischt, geknetet und gepreßt und ein weiter verarbeitbares Produkt extrudiert.

Durch dieses Verfahren kann ein handhabbares, insbesondere transportierbares Produkt erhalten werden, welches je nach konkreten Ausgangsmaterialien z.B. in einem Hüttenwerk wieder verwertet werden kann. Das erhaltene Produkt kann gegenüber dem Ausgangsmaterial trotz Zugabe des Bindemittels ein kleineres Volumen aufweisen. Dies trifft insbesondere auf aufzuarbeitende Faserstoffe zu.

Vorteilhafzerweise wird dem Gemisch aus Schlämmen und / bzw. Faserstoffen und hydraulischen Bindemittel ein Zusatz zur Beschleunigung des Abbindeverhaltens beigemischt.

Der Druck in der Schneckenpresse kann bis zu 100 bar betragen. Durch die beim Pressen erfolgende Temperaturerhöhung verdampfen Flüssigkeiten mit relativ niedrigem Siedepunkt, wie das im Schlamm enthaltene Wasser, welches dadurch aus dem Feststoff-Flüssigkeits-Gemisch weitgehend entfernt werden kann. Im Gegensatz zu anderen Verfahren zur Aufbereitung von Schlämmen wird das in dem Schlamm enthaltene Wasser nicht heraus gepreßt, wobei bekanntlich immer Feinstpartikel mit heraus gespült werden, sondern zum wesentlichen Teil heraus verdampft. Ein Teil des Wassers wird durch das hydraulische Bindemittel gebunden.

Gemäß einer besonderen Ausführungsform der Erfindung werden dem Gemisch aus Schlämmen und / bzw. Faserstoffen und hydraulischen Bindemittel entsprechend der Feuchte der Schlämme und / oder Faserstoffe Stäube beigemischt.

Der Ausgangs-Feuchtegehalt des in der Schneckenpresse zu verarbeitenden Gemisches und damit auch der Gehalt an Restfeuchte des extrudierten Produktes kann durch entsprechende Zugabe von Stäuben, bei denen es sich z.B. um Holzstäube, Filterstäube od.dgl. handeln kann, reguliert werden. Auch ein Schlamm mit besonders großer Feuchte kann deshalb durch entsprechende Zugabe von Stäuben noch so verarbeitet werden, daß ein zufriedenstellend handhabbares Produkt erhalten werden kann. Auch können auf diese Art und Weise als Abfallmaterialien vorliegende Stäube aufbereitet werden. Dabei kann es sich insbesondere um Feuchtigkeit bindende Stäube handeln. Ansonsten wird durch die Zugabe der Stäube nur der Anteil der Trockensubstanz erhöht.

Vorteilhafterweise werden die zu zugebenden Stäube mit Wasser unter Zusatz von Additiven, z.B. mit Tensiden, versetzt, um die zum Teil sehr hohe Oberflächenspannung der Stäube zu vermindern.

Werden Schlammplatten verarbeitet, so sollten diese auf eine maximale Ausdehnung (Länge, Breite und / oder Dicke) von 30 mm vorzerkleinert werden.

Das aus der Schneckenpresse austretende, vom Pressen noch heiße Produkt bindet entsprechend dem verwendeten hydraulischen Bindemittel ab und trocknet nach, wobei das Abbinden des hydraulischen Bindemittels in bekannter Weise über einen gewissen Zeitraum hinweg erfolgt. Da das Produkt jedoch durch das Pressen noch sehr warm ist, erfolgt das Abbinden schneller als beim herkömmlichen Abbinden der verwendeten hydraulischen Bindemittel.

Darüber hinaus kann das aus der Schneckenpresse austretende Produkt noch in einem Trockner z.B. in einem Trockentunnel nachgetrocknet werden. Das Produkt wird dadurch schneller trocken und erhält die für die Weiterverarbeitung erforderliche Stabilität.

Das erhaltene, weiter verarbeitbare Produkt tritt in Form von Pellets oder Stangen aus der Schneckenpresse aus. Diese können sehr leicht zu einem weiter verarbeitenden Betrieb transportiert werden.

Das durch das Pressen in der Schneckenpresse erhaltene Produkt kann, insbesondere, wenn es Metall enthält, in einem Stahlwerk verhüttet werden. Beim Verhütten dieses Produktes verbrennt das in dem Produkt enthaltende Öl ebenso, wie andere, als Verdickungsmittel in Form von Stäuben eingebrachte Material, wenn dieses brennbar ist.

Die Schneckenpresse kann z.B. eine Ausbildung aufweisen, wie sie in den WO-A-83/03.999, DE-A-3.714.508, DE-A-3.714.509 und DE-A-3.714.518, beschrieben sind. Dabei handelt es sich um eine Schneckenpresse mit zwei parallel zueinander angeordneten Schnecken. Es können aber auch andere Schneckenpressen verwendet werden.

## Patentansprüche

1. Verfahren zum Aufbereiten von metallhaltigen und /oder mineralischen Schlämmen und / oder feuchten Metall- oder Mineral-Faserstoffen für die Weiterverarbeitung bei dem die Schlämme und / bzw. Faserstoffe zusammen mit einem hydraulischen Bindemittel, wie Zement, Kalk, Gips od.dgl. in einer Schneckenpresse gemischt, geknetet und gepreßt werden und ein weiter verarbeitbares Produkt extrudiert wird.

2. Verfahren nach Anspruch 1, dadurch gekennzeichnet, daß dem Gemisch aus Schlämmen und / bzw. Faserstoffen und hydraulischen Bindemittel ein Zusatz zur Beschleunigung des Abbindeverhaltens beigemischt wird.

3. Verfahren nach Anspruch 1 oder 2, dadurch gekennzeichnet, daß dem Gemisch aus Schlämmen und / bzw. Faserstoffen und hydraulischen Bindemittel entsprechend der Feuchte der Schlämme und / oder Faserstoffe Stäube beigemischt werden.

4. Verfahren nach einem der vorhergehenden Ansprüche, dadurch gekennzeichnet, daß den Stäuben Additive, insbesondere Tenside, beigemischt werden.

5. Verfahren nach einem der vorhergehenden Ansprüche, dadurch gekennzeichnet, daß das extrudierte, noch warme Produkt abbindet und nachtrocknet.

6. Verfahren nach einem der vorhergehenden Ansprüche, dadurch gekennzeichnet, daß das extrudierte Produkt, insbesondere z.B. in einem Trockentunnel, nachgetrocknet wird.

7. Verfahren nach einem der vorhergehenden Ansprüche, dadurch gekennzeichnet, daß der Druck in dem in der Schneckenpresse bearbeiteten Gemisch bis zu 100 bar beträgt.

8. Verfahren nach einem der vorhergehenden Ansprüche, dadurch gekennzeichnet, daß das erhaltene, weiter verarbeitbare Produkt in Form von Pellets oder Stangen aus der Schneckenpresse austritt.

## Claims

1. A process for preparing metal-containing and/or mineral sludges and/or wet metal or mineral fibrous materials for further processing, wherein the sludges and/or fibrous materials are mixed, worked and pressed together with a hydraulic binding agent such as cement, lime, gypsum or the like in a screw press and a product which can be subjected to further processing is extruded.

2. A process according to claim 1 characterised in that an additive for accelerating the setting procedure is mixed with the mixture of sludges and/or fibrous materials and hydraulic binding agent.

3. A process according to claim 1 or claim 2 characterised in that dusts are added to the mixture of sludges and/or fibrous materials and hydraulic binding agent in accordance with the wetness of the sludges and/or fibrous materials.

4. A process according to one of the preceding claims characterised in that additive materials, in particular surface active agents, are mixed with the dusts.

5. A process according to one of the preceding claims characterised in that the extruded product while still warm sets and undergoes subsequent drying.

6. A process according to one of the preceding claims characterised in that the extruded product is subjected to subsequent drying, in particular for example in a drying tunnel.

7. A process according to one of the preceding claims characterised in that the pressure in the mixture Which is processed in the screw press is up to 100 bars.

8. A process according to one of the preceding claims characterised in that the product obtained which can be further processed issues from the screw press in the form of pellets or rods.

## Revendications

1. Procédé de préparation de boues contenant des métaux et/ou de boues minérales et/ou de matières fibreuses humides métalliques ou minérales en vue d'un traitement ultérieur, dans lequel les boues et/ou les matières fibreuses sont mélangées, malaxées et pressées dans une presse à vis avec un liant hydraulique, tel que du ciment, de la chaux, du plâtre ou autres, et est extrudé un produit pouvant être soumis à un traitement ultérieur.

2. Procédé suivant la revendication 1, caractérisé en ce que dans le mélange de boues et/ou de matières fibreuses et de liant hydraulique est incorporé un adjuvant pour accélérer la tenue de prise.

3. Procédé suivant la revendication 1 ou 2, caractérisé en ce que dans le mélange de boues et/ou de matières fibreuses et de liant hydraulique sont incorporées des poussières, en fonction de l'humidité des boues et/ou des matières fibreuses.

4. Procédé suivant l'une des revendications précédentes, caractérisé en ce que dans les poussières sont incorporés des adjuvants, en particulier des surfactifs.

5. Procédé suivant l'une des revendications précédentes, caractérisé en ce que le produit extrudé encore chaud durcit et continue à sécher

6. Procédé suivant l'une des revendications précédentes, caractérisé en ce que le produit extrudé est davantage séché, par exemple, dans un tunnel de séchage.

7. Procédé suivant l'une des revendications précédentes, caractérisé en ce que la pression dans le mélange traité dans la presse à vis est de jusqu'à 100 bars.

8. Procédé suivant l'une des revendications précédentes, caractérisé en ce que le produit obtenu et pouvant être soumis à un traitement ultérieur sort de la presse à vis sous forme de boulettes ou de barres.
